Europäisches Patentamt

European Patent Office

Office européen des brevets

(11) Veröffentlichungsnummer: **0 508 087 A1**

# EUROPÄISCHE PATENTANMELDUNG

(21) Anmeldenummer: **92103436.9**

(22) Anmeldetag: **28.02.92**

(51) Int. Cl.5: **B23Q 3/155**

(30) Priorität: **08.04.91 DE 4111307**

(43) Veröffentlichungstag der Anmeldung:
**14.10.92 Patentblatt 92/42**

(84) Benannte Vertragsstaaten:
**AT CH ES FR GB IT LI SE**

(71) Anmelder: **Ott Maschinentechnik GmbH**
**Jägerstrasse 4-12**
**W-8960 Kempten(DE)**

(72) Erfinder: **Lechleiter, Karl**
**Sonnenmulde 11**
**W-8967 Oy-Mittelberg(DE)**
Erfinder: **Heinl, Thomas**
**Steufzger Strasse 144**
**W-8960 Kempten(DE)**
Erfinder: **Heel, Helmut**
**Andreas-Mayer-Strasse 82 1/8**
**W-8951 Lengenwang(DE)**

(74) Vertreter: **Liebau, Gerhard, Dipl.-Ing.**
**Patentanwaltsbüro Liebau & Liebau**
**Erzgebirgsstrasse 7 Postfach 22 02 29**
**W-8900 Augsburg 22(DE)**

(54) **Werkzeugwechsler.**

(57) Ein Werkzeugwechsler weist einen parallel zur Achse (A oder B) einer Werkzeugaufnahme beweglichen Träger (7), eine in dem Träger (7) um eine Drehachse (D) schwenkbaren Schwenkkopf (8), zwei an diesem, im wesentlichen radial zur Drehachse (D) angeordnete Greiferarme (9, 10) auf, deren freie Enden je einen Greifer (11) tragen. Die freien Enden der Greiferarme (9, 10) sind gegenüber der Drehachse (D) so abgewinkelt, daß sich die beiden Werkzeugachsen (W1, W2), der von den Greifern (11) erfaßten Werkzeuge (5, 6) und die Drehachse (D) in einem einzigen Punkt (P) schneiden, und daß die Werkzeugachsen (W1, W2) der von den Greifern (11) erfaßten Werkzeuge (5, 6) zu deren Einspannenden (5a, 6a) hin gegenüber der Drehachse (d) divergieren. Jede der Werkzeugachsen (W1, W2) schließt mit der Drehachse (D) einen spitzen Winkel ($\alpha$) von etwa 10 - 30° ein. Die Drehachse (D) ist im Träger (7) so angeordnet, daß sie beim Wechseln die Achse (A oder B) der Werkzeugaufnahme (4) schneidet und mit dieser Achse einen Winkel ($\alpha$) einschließt, der dem spitzen Winkel ($\alpha$) entspricht.

FIG.1

EP 0 508 087 A1

Die Erfindung betrifft einen Werkzeugwechsler zum Wechseln von Werkzeugen an mindestens einer Werkzeugaufnahme, insbesondere einer Arbeitsspindel , einer Werkzeugmaschine, mit einem parallel zur Achse der Werkzeugaufnahme beweglichen Träger, mit einem in dem Träger um eine Drehachse schwenkbaren Wechselkopf, mit zwei am Wechselkopf im wesentlichen radial zur Drehachse angeordneten Greiferarmen, deren freie Enden je einen Greifer tragen und gegenüber der Drehachse so abgewinkelt sind, daß die Werkzeugachsen der von den Greifern erfaßten Werkzeuge zu deren Einspannenden hin gegenüber der Drehachse divergieren, wobei die Drehachse im Träger beim Wechselvorgang in spitzem Winkel zur Achse (Spindelachse) der Werkzeugaufnahme ausgerichtet ist.

Bei einem bekannten Werkzeugwechsler dieser Art (DE 34 08 734 C2) verläuft die Drehachse in einem Winkel von 45° zur Achse der Arbeitsspindel, und die mit den Greifern versehenen Enden der Greiferarme sind um 45° zur Drehachse hin abgewinkelt. Durch diese Ausgestaltung verlaufen die Werkzeugachsen der von den Greifern erfaßten Werkzeuge senkrecht zueinander und die Einspannenden der Werkzeuge stehen im Winkel von 45° nach außen von der Drehachse ab. Hierdurch ergibt sich beim Schwenken des Wechselkopfes ein großer Flugkreis im Bereich der Einspannenden. Außerdem stehen die Arbeitsenden der Werkzeuge über die Drehachse vor, so daß sich bei längeren Werkzeugen beim Schwenken des Wechselkopfes auch ein großer Flugkreis im Bereich der Arbeitsenden ergibt. Es muß daher für den Werkzeugwechsel ein entsprechend großer Kollisionsfreiraum an der Spindelnase und auch im Bereich des aufgespannten Werkstückes vorhanden sein, damit die Werkzeuge beim Schwenken des Wechselkopfes nicht mit dem Werkstück oder der Maschine kollidieren. Außerdem sind bei dem bekannten Werkzeugwechsler die Enden der Greifarme derart ausgerichtet, daß die Werkzeugachsen der von den Greifern gehaltenen Werkzeuge beim Wechselvorgang in parallelen, jeweils mit Abstand beiderseits der Drehachse des Wechselkopfes liegenden Ebenen liegen. Dies hat den Nachteil, daß jeweils das gesamte Werkzeug in einer zur Drehachse parallelen Ebene angeordnet ist und damit auch sein Massenschwerpunkt in einem Abstand, der mindestens dem Abstand dieser Ebene von der Drehachse entspricht. Hierdurch ergeben sich beim Schwenken des Wechselkopfes erhebliche Drehmomente, die zum Beschleunigen und Abbremsen des Wechselkopfes erforderlich sind. Diese hohen Drehmomente lassen insbesondere bei schweren Werkzeugen nur ein verhältnismäßig langsames Schwenken des Wechselkopfes zu, wodurch die Wechselzeit entsprechend verlängert wird.

Bei einem anderen bekannten Werkzeugwechsler (DE 31 36 612 A1) sind an einem um eine Drehachse schwenkbaren Wechselkopf drei nach Art eines orthogonalen Dreibeines zueinander angeordnete Greiferarme vorgesehen. Die Greifenden derselben sind so ausgerichtet, daß die Achsen jeweils zweier benachbarter Werkzeuge in einer Ebene liegen, so daß sich die Werkzeugachsen aller drei Werkzeuge in einem Punkt treffen. Die Drehachse des Wechselkopfes verläuft ebenfalls durch diesen Punkt, wobei dieser Punkt auf der Spindelachse im Bereich des Spindelgehäuses hinter der Spindelnase liegt. Die Werkzeuge sind hierbei in den Greifern so angeordnet, daß ihre Einspannenden zu der Drehachse hin konvergieren. Diese Ausgestaltung hat den Nachteil, daß die Greiferarme, abhängig von den Abmessungen des Spindelgehäuses, verhältnismäßig lang und auch dementsprechend sehr stabil ausgebildet sein müssen, denn der Träger für die Drehachse kann bei dieser Ausgestaltung nur seitlich neben dem Spindelgehäuse angeordnet sein. Die langen und schweren Wechselarme haben eine hohe Massenträgheit und lassen kein schnelles Schwenken zu, wodurch sich die Wechselzeit entsprechend verlängert. Außerdem ist dieser bekannte Werkzeugwechsler für solche Werkzeugmaschinen ungeeignet, die zwei im rechten Winkel zueinander angeordnete Arbeitsspindeln aufweisen.

Der Erfindung liegt daher die Aufgabe zugrunde, einen Werkzeugwechsler der eingangs erwähnten Art zu schaffen, der eine kompakte Bauweise mit müglichst kleinem Flugkreis aufweist, so daß der freizuhaltende Kollisionsraum möglichst klein gehalten werden kann, und der durch kürzere Schwenkzeit eine Verkürzung der Wechselzeit ermöglicht.

Dies wird nach der Erfindung dadurch erreicht, daß die freien Enden der Greifarme gegenüber der Drehachse so abgewinkelt sind, daß sich die beiden Werkzeugachsen der von den Greifern erfaßten Werkzeuge und die Drehachse in einem einzigen Punkt schneiden, wobei jede der Werkzeugachsen mit der Drehachse einen spitzen Winkel von etwa 10 - 30° einschließt, und daß die Drehachse im Träger so angeordnet ist, daß der Punkt beim Wechseln vor der Werkzeugaufnahme (Spindelachse) auf der Achse der Werkzeugaufnahme liegt und die Drehachse mit dieser Achse einen Winkel einschließt, der dem spitzen Winkel entspricht, den die Werkzeugachsen mit der Drehachse einschließen.

Bei dieser Ausgestaltung des Werkzeugwechslers sind die Werkzeugachsen der von den Greifern erfaßten Werkzeuge nur in einem verhältnismäßig kleinen Winkel bis zu 30° gegenüber der Drehachse geneigt. Infolgedessen ergibt sich ein kleiner Flugkreis der Einspannenden der Werkzeuge. Außerdem sind die Arbeitsenden der Werkzeuge zu der Drehachse hin geneigt und haben nur einen geringen Abstand voneinander bzw. von der Drehachse. Dies hat den Vorteil, daß auch die Arbeitsenden der Werkzeuge beim Schwenken des Wechselkopfes einen kleinen flugkreis beschreiben. Infolgedessen kann der Kollisionsfreiraum vor der Werkzeugaufnahme (vor der Spindelnase) und auch im Bereich des aufgespannten Werkstückes klein gehalten werden. Die Neigung der Werkzeugachsen innerhalb des angegebenen Winkelbereiches hat den weiteren Vorteil, daß beim Einwechseln des Arbeitswerkzeuges das zweite Werkzeug sich nicht im Kollisionsbereich mit der Arbeitsspindel des Spindelkastens oder anderer Maschinenkomponenten konventioneller Bohr- und Fräsmaschinen befindet. Da die Werkzeugachsen zu den Arbeitsenden der Werkzeuge hin einander zugeneigt sind, liegen die Massenschwerpunkte der Werkzeuge näher an der Drehachse. Es ergeben sich daher beim Schwenken des Wechselkopfes geringere Trägheitskräfte, so daß der Wechselkopf mit höherer Geschwindigkeit geschwenkt werden kann. Hierdurch wird die Wechselzeit verkürzt. Außerdem kann der Werkzeugwechsler mit verhältnismäßig kurzen Greiferarmen ausgestattet werden, wodurch nicht nur die Bauabmessungen sondern auch das Gewicht und der Abstand der Massenschwerpunkte der Greiferarme von der Drehachse verringert wird. Dies trägt ebenfalls zu einer Verringerung der Trägheitskräfte und einer Verkürzung der Wechselzeit bei. Darüber hinaus weist der erfindungsgemäße Werkzeugwechsler, ähnlich wie der eingangs beschriebene bekannte Werkzeugwechsler, den Vorteil auf, daß er auch zur wechselweisen Bedienung von zwei Arbeitsspindeln geeignet ist, die im rechten Winkel zueinander angeordnet sind.

Eine besonders vorteilhafte Ausgestaltung der Erfindung besteht darin, daß die Greiferarme in bezug auf die Drehachse um maximal 90° versetzt zueinander angeordnet sind. Dies hat den Vorteil, daß der Wechselkopf beim Wechselvorgang nur maximal eine viertel Drehung ausführen muß. Dies trägt ebenfalls zur Verkürzung der Wechselzeit bei.

Weitere vorteilhafte Ausgestaltungen der Erfindung sind in den übrigen Unteransprüchen gekennzeichnet. Es zeigen:

Figur 1 eine schaubildliche Darstellung des Werkzeugwechslers und einer Werkzeugmaschine,

Figur 2 eine schaubildliche Darstellung des Wechselkopfes,

Figur 3 eine Seitenansicht des Wechselkopfes mit strichpunktiert dargestelltem Spindelgehäuse.

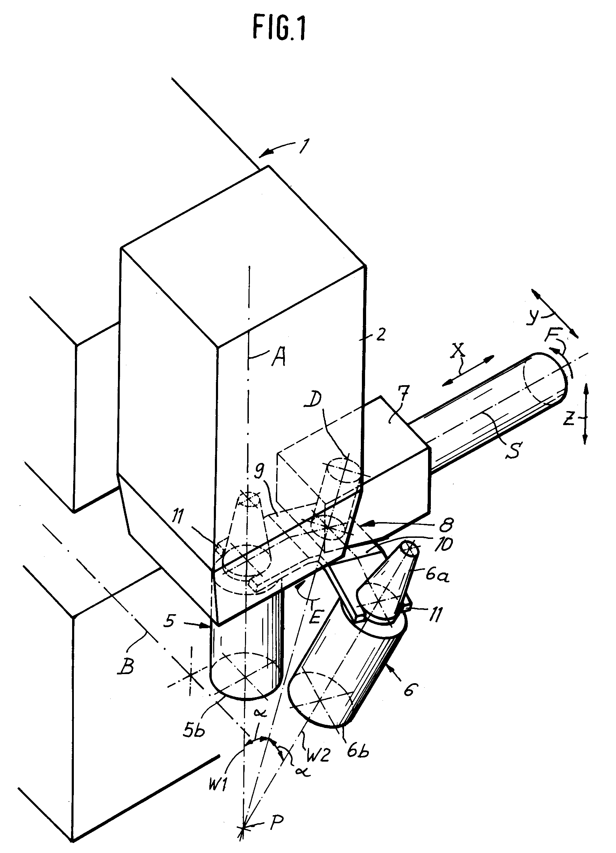

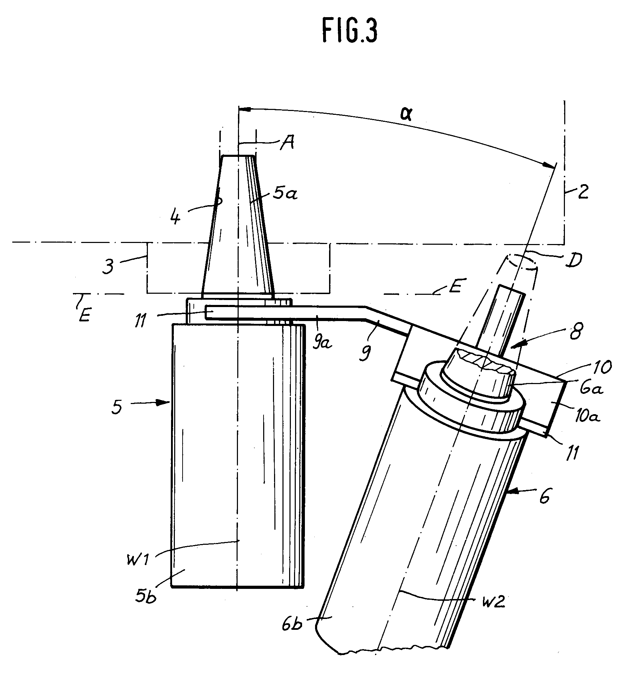

In der Zeichnung ist mit 1 eine herkömmliche Universal-Bohr- und Fräsmaschine bezeichnet, die in einem vertikal verschiebbaren Spindelgehäuse 2 eine vertikale Arbeitsspindel 3 aufweist. Von dieser Arbeitsspindel ist in Figur 1 nur deren Achse A dargestellt. Die Universal-Bohr- und Fräsmaschine kann ferner auch eine horizontale Arbeitsspindel aufweisen, von der in Figur 1 jedoch auch nur deren Achse dargestellt und mit B bezeichnet ist. Die vertikale und die horizontale Arbeitsspindel haben je eine Werkzeugaufnahme, die z.B. als Steilkegelaufnahme 4 ausgebildet sein kann, wie es in Figur 3 dargestellt ist. In diese Werkzeugaufnahme sollen je nach Bearbeitungsaufgabe nacheinander verschiedene Werkzeuge 5, 6 eingesetzt werden.

Zu diesem Zweck ist der erfindungsgemäße Werkzeugwechsler vorgesehen. Dieser weist einen Träger 7 auf, der bei dem gezeigten Ausführungsbeispiel in einem nicht dargestellten Lagerarm um die Schwenkachse S schwenkbar ist. Die Schwenkachse S ist senkrecht zu einer Ebene angeordnet, die durch die Achsen A und B der beiden senkrecht zueinander angeordneten Arbeitsspindeln verläuft. Mittels des Lagerarmes ist der Träger 7 außerdem in Richtung Z parallel zur Spindelachse A und in Richtung Y parallel zur Spindelachse B verschiebbar. Weitere Bewegungsmöglichkeiten des Trägers können vorgesehen sein, um die Werkzeuge in ein nicht dargestelltes Magazin zu übergeben bzw. aus diesem zu entnehmen.

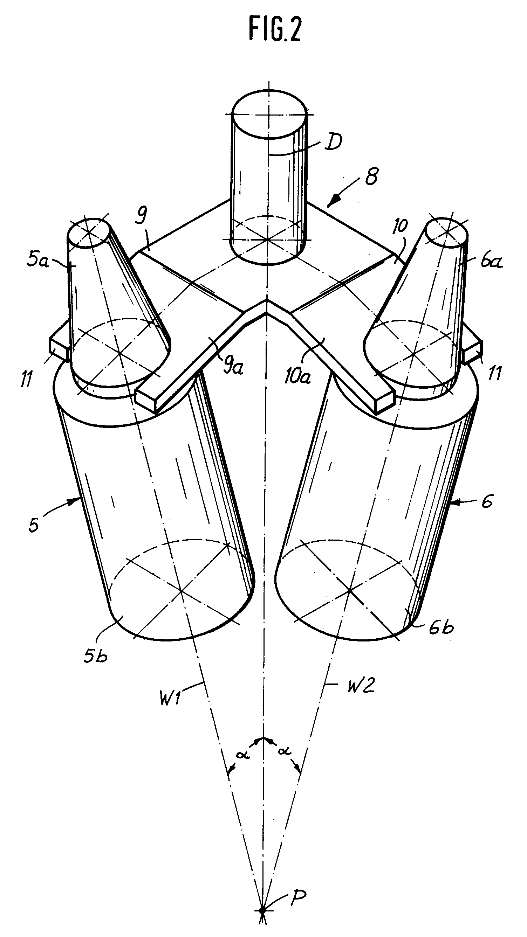

In dem Träger 7 ist um eine Drehachse D ein Wechselkopf 8 schwenkbar gelagert. Der Wechselkopf 8 weist zwei in bezug auf die Drehachse D um 90° zueinander versetzte Greiferarme 9, 10 auf. Der Versatz der beiden Greiferarme 9, 10 um 90° oder weniger zueinander hat den Vorteil, daß der Greiferkopf beim Werkzeugwechsel jeweils nur um 90° oder weniger geschwenkt zu werden braucht, wodurch sich kürzere Wechselzeiten ergeben. Wenn man auf diesen Vorteil verzichtet, können gegebenenfalls die Greiferarme 9, 10 auch diametral zueinander angeordnet sein. Wie man weiterhin aus Figur 2 erkennen kann, sind die freien Enden 9a und 10a jedes Greiferarmes gegenüber der Drehachse D abgewinkelt und tragen bekannte Greifer 11, die jedoch nur schematisch angedeutet sind. Die freien Enden 9a, 10a der Greiferarme 9, 10 sind gegenüber der Drehachse D so abgewinkelt, daß sich die beiden Werkzeugachsen W1 und W2 der von den Greifern 11 erfaßten Werkzeuge und die Drehachse D in einem einzigen Punkt P schneiden. Hierbei schließt jede der Werkzeugachsen W1 und W2 einen spitzen Winkel α mit der Drehachse von etwa 10 - 30° ein. Vorzugsweise beträgt dieser Winkel etwa 20°. Die freien Enden 9a und 10a der Greiferarme 9, 10 sind gegenüber der Drehachse D ferner so abgewinkelt, daß die Werkzeugachsen W1 und W2 der von den Greifern 11 erfaßten Werkzeuge 5, 6 zu deren Einspannenden 5a, 6a hin divergieren. Die Einspannenden 5a, 6a der Werkzeuge 5, 6 sind der Werkzeugaufnahme der Werkzeugmaschine angepaßt. Es kann sich beispielsweise um Steilkegel oder um jede übliche Ausgestaltung eines Einspannendes eines Werkzeuges handeln. Die die Schneiden tragenden Arbeitsenden 5b und 6b der Werkzeuge 5, 6 konvergieren zueinander um so mehr, je weiter sie von den Greifern 11 entfernt sind.

Die Drehachse D ist in dem Träger 7 so angeordnet, daß sie beim eigentlichen Ein- oder Auswechseln des jeweiligen Werkzeuges in die Aufnahme der jeweiligen Spindel, deren Achse A oder B schneidet, wie es in Figur 1 gezeigt ist. Der Punkt P liegt dann ebenfalls auf der Achse A oder B. Die Drehachse D schließt mit der jeweiligen Achse A oder B derjenigen Aufnahme, in die ein Werkzeug ein- oder ausgewechselt werden soll, einen Winkel $\alpha$ ein, der dem spitzen Winkel $\alpha$ entspricht, den die Werkzeugachsen W1 und W2 mit der Drehachse D einschließen.

Der Wechselvorgang läuft in folgender Weise ab:
Der Greifkopf 8 hat mit dem am Greiferarm 10 angeordneten Greifer das Werkzeug 6 aus dem nicht dargestellten Magazin entnommen. Der Träger 7 wird in Richtung X seiner Schwenkachse S verschoben, bis sich der am Greiferarm 9 angeordnete Greifer 11 im Bereich der im Spindelgehäuse 2 enthaltenen vertikalen Arbeitsspindel befindet. Der Greifer 11 erfaßt das in der vertikalen Arbeitsspindel gespannte Werkzeug 5. Sodann führt der Träger 7 eine vertikale Bewegung in Richtung Z, d.h. genau in Richtung der Spindelachse A, aus. Hierdurch entnimmt er das Werkzeug 5 aus der Arbeitsspindel. Wenn das Einspannende 5a die Werkzeugaufnahme 4 der vertikalen Arbeitsspindel 3 vollständig verlassen hat, wird die Abwärtsbewegung des Trägers 7 gestoppt. Der Wechselkopf 8 wird nunmehr um seine Drehachse D in Richtung E um 90° geschwenkt, wodurch die Werkzeugachse W2 des Werkzeuges 6 nunmehr mit der Spindelachse A fluchtet und sich das Einspannende 6a vor der Spindelnase befindet. Durch Aufwärtsbewegung des Trägers 7 in Richtung Z wird das Einspannende 6a in die Werkzeugaufnahme der vertikalen Spindel geschoben und gespannt. Nach dem Öffnen des am Greiferarm 10 angeordneten Greifers 11 ist der eigentliche Wechselvorgang beendet. Der Träger 7 entfernt sich in Richtung X von der Spindelachse A, bringt das entnommene Werkzeug in das Magazin und entnimmt dort ein neues Werkzeug.

Wenn in die horizontale Arbeitsspindel mit der Spindelachse B ein Werkzeug eingewechselt werden soll, dann ist es hierzu nur erforderlich, den Träger 7 in Richtung F um die Schwenkachse S um 90° zu schwenken und so weit in Richtung Z nach unten zu verfahren, bis die Drehachse D die Spindelachse B schneidet. In dieser Stellung fluchtet eine der Werkzeugachsen W1 oder W2 mit der Spindelachse B. Die Lage der Werkzeugachsen W1 bzw. W2 gegenüber der Drehachse D wird durch die Abwinklung der Enden 9a, 10a der Greiferarme festgelegt.

Wie man aus Figur 3 erkennen kann, befindet sich das Einspannende 6a des einzuwechselnden Werkzeuges unterhalb des Einspannendes 5a des in der Arbeitsspindel 3 befindlichen Werkzeuges 5. Hierdurch werden beim Wechselvorgang Kollisionen des Einspannendes 6a mit dem Spindelgehäuse 2 vermieden.

**Patentansprüche**

1.  Werkzeugwechsler zum Wechseln von Werkzeugen an mindestens einer Werkzeugaufnahme, insbesondere einer Arbeitsspindel, einer Werkzeugmaschine, mit einem parallel zur Achse der Werkzeugaufnahme beweglichen Träger, mit einem in dem Träger um eine Drehachse schwenkbaren Wechselkopf, mit zwei am Wechselkopf im wesentlichen radial zur Drehachse angeordneten Greiferarmen, deren freie Enden je einen Greifer tragen und gegenüber der Drehachse so abgewinkelt sind, daß die Werkzeugachsen der von den Greifern erfaßten Werkzeuge zu deren Einspannenden hin gegenüber der Drehachse divergieren, wobei die Drehachse im Träger beim Wechselvorgang in spitzem Winkel zur Achse (Spindelachse) der Werkzeugaufnahme ausgerichtet ist, **dadurch gekennzeichnet** daß die freien Enden (9a, 10a) der Greiferarme (9, 10) gegenüber der Drehachse (D) so abgewinkelt sind, daß sich die beiden Werkzeugachsen (W1, W2) der von den Greifern (11) erfaßten Werkzeuge (5,6), und die Drehachse (D) in einem einzigen Punkt (P) schneiden, wobei jede der Werkzeugachsen (W1, W2) mit der Drehachse (D) einen spitzen Winkel ($\alpha$) von etwa 10 - 30° einschließt, und daß die Drehachse (D) im Träger (7) so angeordnet ist, daß der Punkt (P) beim Wechseln vor der Werkzeugaufnahme (Spindelnase) auf der Achse (A oder B) der Werkzeugaufnahme (4) liegt und die Drehachse (D) mit dieser Achse einen Winkel ($\alpha$) einschließt, der dem spitzen Winkel ($\alpha$) entspricht den die Werkzeugachsen (W1, W2) mit der Drehachse (D) einschließen.

2.  Werkzeugwechsler nach Anspruch 1, **dadurch gekennzeichnet,** daß die Greiferarme (9, 10) in bezug auf die Drehachse (D) um maximal 90° versetzt zueinander angeordnet sind.

3.  Werkzeugwechsler nach Anspruch 1 oder 2, **dadurch gekennzeichnet,** daß der spitze Winkel (α) etwa 20° beträgt.

4. Werkzeugwechsler nach einem der Ansprüche 1 - 3, **dadurch gekennzeichnet,** daß der Träger (7) um eine Schwenkachse (S) schwenkbar ist, die senkrecht zu einer Ebene angeordnet ist, welche durch die Achsen (A, B) zweier zueinander senkrechter Arbeitsspindeln einer Werkzeugmaschine verläuft.

# FIG.1

# FIG.2

# FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN vol. 13, no. 335 (M-856)(3683) 27. Juli 1989 & JP-A-1 115 540 ( HITACHI SEIKI CO LTD ) 8. Mai 1989 * Zusammenfassung * --- | 1 | B23Q3/155 |
| A | PATENT ABSTRACTS OF JAPAN vol. 8, no. 128 (M-302)(1565) 14. Juni 1984 & JP-A-59 030 641 ( NIIGATA TEKKOSHO K.K. ) 18. Februar 1984 * Zusammenfassung * ----- | | |

**RECHERCHIERTE SACHGEBIETE (Int. Cl.5)**

B23Q

Der vorliegende Recherchenbericht wurde für alle Patentansprüche erstellt

| Recherchenort | Abschlußdatum der Recherche | Prüfer |
|---|---|---|
| DEN HAAG | 21 JULI 1992 | RAMBAUO P.M.J. |